Europäisches Patentamt

European Patent Office

Office européen des brevets

(19)

(11) Numéro de publication : **0 368 734 B1**

(12) ## FASCICULE DE BREVET EUROPEEN

(45) Date de publication du fascicule du brevet :
**12.08.92 Bulletin 92/33**

(51) Int. Cl.$^5$ : **B29C 67/14**

(21) Numéro de dépôt : **89403042.8**

(22) Date de dépôt : **06.11.89**

(54) **Outillage pour le moulage de panneaux auto-raidis en matériau composite.**

(30) Priorité : **08.11.88 FR 8814561**

(43) Date de publication de la demande :
**16.05.90 Bulletin 90/20**

(45) Mention de la délivrance du brevet :
**12.08.92 Bulletin 92/33**

(84) Etats contractants désignés :
**BE CH DE ES GB IT LI NL SE**

(56) Documents cités :
**EP-A- 0 197 709**
**DE-A- 3 418 110**
**DE-A- 3 643 502**
**FR-A- 2 440 831**
**MODERN PLASTICS INTERNATIONAL, vol. 17, no. 4, avril 1987, pages 44-47, Lausanne, CH; A.S. WOOD: "Advanced thermoplasticcomposites get the full automation treatment"**

(56) Documents cités :
**COMPOSITES, vol. 23, no. 3, mai-juin 1983, pages 5-9, Paris, FR; G. KEIL et al.: "Préimprégnés thermodurcissables: leséquipements nécessaires à leur mise en oeuvre" COMPOSITES, vol. 19, no. 1, janvier 1988, pages 37-47, Butterworth & Co. Ltd., Guildford, Surrey, GB; P.J. MALLON et al.:"Development of a pilot autoclave for polymeric diaphragm forming of continuous fibre-reinforced thermoplastics"**

(73) Titulaire : **AEROSPATIALE Société Nationale Industrielle**
**37, Boulevard de Montmorency**
**F-75781 Paris Cédex 16 (FR)**

(72) Inventeur : **Boime, Bernard**
**32, rue Daniel Becker**
**F-92000 Nanterre (FR)**
Inventeur : **Taquoy, Bernard**
**9, Avenue du Piple**
**F-94370 Sucy en Brie (FR)**

(74) Mandataire : **Mongrédien, André et al**
**c/o SOCIETE DE PROTECTION DES INVENTIONS 25, rue de Ponthieu**
**F-75008 Paris (FR)**

EP 0 368 734 B1

Jouve, 18, rue Saint-Denis, 75001 PARIS

## Description

L'invention concerne un outillage permettant de fabriquer par moulage des panneaux auto-raidis en matériau composite à matrice thermodurcissable.

Les pièces en matériau composite sont habituellement fabriquées par drapage de plusieurs nappes ou couches superposées, formées chacune de fibres imprégnées de résine. Selon l'application envisagée, les fibres peuvent être indifféremment en carbone, en verre, en Kevlar, etc. La résine constituant la matrice du matériau composite est généralement une résine thermodurcissable qui polymérise avec la température.

L'invention s'applique à tous les secteurs industriels dans lesquels on utilise des pièces en matériau composite, c'est-à-dire notamment aux industries aéronautique, spatiale et automobile, maritime et ferroviaire.

Dans ces différents secteurs, l'utilisation de pièces en matériau composite permet d'alléger considérablement les structures. Ce gain de poids est dû non seulement à la résistance spécifique de ces matériaux, qui est supérieure à celle des alliages métalliques classiques, mais aussi à la possibilité offerte par ces matériaux d'obtenir par moulage des formes complexes. Il est ainsi possible de rassembler en une seule pièce en matériau composite un sous-ensemble mécanique qui serait constitué, selon les techniques traditionnelles, de plusieurs pièces métalliques élémentaires reliées entre elles par exemple par soudure ou au moyen de fixations mécaniques (rivets, vis, etc.).

Dans le cas particulier des panneaux auto-raidis, formés d'une plaque de base munie de raidisseurs, on peut réaliser ces panneaux en une seule pièce en matériau composite, alors que, selon les techniques de fabrication traditionnelles, ces mêmes panneaux sont fabriqués à partir d'une plaque de base sur laquelle sont rapportés, par exemple par rivetage, des raidisseurs en forme de cornière.

La fabrication de tels panneaux auto-raidis en matériau composite à matrice thermodurcissable s'effectue par moulage, à l'aide d'un outillage approprié que l'on place dans une étuve ou dans un autoclave dont l'élévation de température assure la polymérisation de la résine.

Dans la pratique, cette opération de moulage soulève des difficultés de réalisation liées, d'une part, aux fonctions à satisfaire lors du moulage d'un matériau composite thermodurcissable et, d'autre part, à la structure particulière des panneaux auto-raidis.

Les fonctions à satisfaire lors du moulage d'une pièce en matériau composite thermodurcissable, sont :

– l'élévation de température nécessaire à l'activation de la réaction de polymérisation ;

– l'application d'une pression perpendiculaire à la surface des couches pendant toute la durée du cycle de cuisson de la pièce, nécessaire au bon compactage des couches et à la qualité finale de la pièce ;

– l'application d'une pression uniforme sur toute la surface de la pièce, afin d'éviter de chasser localement la résine par un effet de pression différentielle entre deux zones, en raison de la faible viscosité de cette résine en début de cycle de polymérisation ; et

– l'utilisation d'un outillage de moulage dont le système d'application de la pression soit capable de suivre la diminution d'épaisseur des pièces dans toutes les directions qui se produit lors de la polymérisation, afin que ce système puisse remplir sa fonction pendant toute la durée du cycle de polymérisation.

De plus, la fabrication d'un panneau auto-raidi nécessite l'utilisation d'un outillage de moulage remplissant également les fonctions géométriques suivantes :

– maintien du pas entre les raidisseurs ; et

– maintien de la planéité des raidisseurs, afin d'éviter toute ondulation de ces derniers, qui risquerait d'initier un flambage local des panneaux sollicités en compression.

Les outillages de moulage utilisés actuellement pour le moulage de telles structures présentent tous des inconvénients majeurs.

Un premier outillage connu est constitué par un moule fermé dans lequel sont emprisonnées des vessies gonflables qui sont placées entre les raidisseurs du panneau à polymériser.

Dans ce cas, le moule contenant la pièce et les vessies doit être massif afin de reprendre les efforts de pression interne appliqués à ces dernières. Il est donc coûteux et difficile à chauffer.

De plus, les vessies gonflables étant par nature des éléments souples et flottants, le maintien du pas entre les raidisseurs et le maintien de la planéité des raidisseurs ne sont pas assurés de façon satisfaisante. En d'autres termes, les pièces obtenues présentent des défauts géométriques importants.

Enfin, un tel outillage devient très volumineux lorsqu'il est utilisé pour mouler des pièces de plusieurs mètres de long.

Un autre outillage connu utilisé pour mouler des panneaux auto-raidis comporte, comme le précédent, un moule massif fermé. Cependant, les vessies gonflables sont remplacées par des cales en élastomère.

Cet outillage présente les mêmes inconvénients que le précédent quant au dimensionnement du moule.

De plus, la pression appliquée sur la pièce résulte de la dilatation thermique des noyaux en élastomère, de sorte que la pression et la température ne sont pas pilotables séparément. Ceci est rédhibitoire lorsqu'on utilise certaines résines pour former la matrice du matériau composite.

Par ailleurs, si le maintien géométrique des raidisseurs est meilleur que lorsqu'on utilise des vessies gonflables, la création de surcontraintes locales peut faire fluer le matériau constituant les noyaux expansibles, de telle sorte que ces derniers entraînent alors avec eux les raidisseurs adjacents. Le maintien du pas entre les raidisseurs ainsi que le maintien de leur planéité ne sont donc pas totalement assurés.

En outre, les noyaux solides en élastomère ne permettent pas de redistribuer les contraintes uniformément dans toutes les directions, de sorte que la pression appliquée sur la pièce en cours de moulage n'est pas uniforme.

Enfin, la diminution d'épaisseur de la pièce lors de la polymérisation s'accompagne d'une chute de la pression appliquée par les noyaux en élastomère, qui n'est pas sans effet sur la qualité finale de la pièce.

Dans un autre outillage existant, des cales en élastomère sont également placées entre les raidisseurs du panneau à polymériser, mais l'ensemble ainsi formé est placé entre un marbre sur lequel repose la plaque de base du panneau et une vessie dont le bord périphérique est raccordé de façon étanche sur le marbre, cette vessie recouvrant les cales en élastomère. l'application de la pression sur la pièce est obtenue dans ce cas en faisant le vide dans l'espace délimité entre le marbre et la vessie et enfermant à la fois la pièce et les cales. Dans ce cas, les cales en élastomère sont utilisées comme conformateurs géométriques et redistribuent sur le panneau la pression interne de l'autoclave, qui est appliquée sur la vessie d'étanchéité.

Dans cette technique, la mise en pression est découplée de la température et on obtient la même souplesse pour le pilotage des cycles de cuisson qu'en utilisant des vessies gonflables.

D'autre part, l'outillage n'a pas à reprendre des efforts de pression élevés puisqu'il est soumis sur ses deux faces à la pression régnant dans l'autoclave. Par conséquent, le marbre peut être formé dans une paroi très légère.

Cependant, comme dans le montage précédent, la pression appliquée sur la pièce n'est pas parfaitement uniforme et le maintien du pas entre les raidisseurs ainsi que le maintien de la planéité des raidisseurs sont tributaires des éventuels fluages du matériau constituant les cales.

Enfin, une quatrième technique connue de fabrication de panneaux auto-raidis en matériau composite consiste à utiliser un outillage comparable à celui de la troisième technique décrite, c'est-à-dire un marbre associé à une vessie d'étanchéité, en remplaçant les cales en matériau élastomère par des cales solides indéformables. La vessie applique alors la pression régnant dans l'autoclave, au travers des cales indéformables, sur les parties de la plaque de base situées entre les raidisseurs. Par ailleurs, la dilatation différentielle entre les cales et le marbre applique une pression sur les faces des raidisseurs.

Cette technique permet donc de garantir de bonnes caractéristiques de positionnement et de planéité des raidisseurs.

Cependant, la pression appliquée sur les raidisseurs dépend de la température et n'est donc pas identique à celle qui est appliquée sur la plaque de base. Il existe donc une pression différentielle entre la plaque de base et les raidisseurs, qui tend à chasser la résine vers la plaque de base en début de cycle de polymérisation.

D'autre part, cette solution est condamnée lorsque la plaque de base présente des surépaisseurs locales. En effet, les variations d'épaisseur de cette plaque lors du cycle de polymérisation sont alors différentes selon que les zones de la plaque de base sont plus ou moins épaisses, de sorte que les cales indéformables ne seraient plus en appui en fin de cycle que sur les zones les moins épaisses de la plaque de base. Aucune pression ne serait donc plus appliquée sur les zones plus épaisses de cette dernière.

En conclusion, il n'existe actuellement aucune technique de moulage qui soit parfaitement satisfaisante pour permettre la fabrication de panneaux auto-raidis en matériau composite à matrice thermodurcissable.

L'invention a précisément pour objet un outillage nouveau permettant de mouler des panneaux auto-raidis en matériau composite en garantissant une parfaite géométrie des raidisseurs ainsi que l'obtention des conditions de température et de pression qu'il est souhaitable de respecter lors du moulage d'un matériau composite à matrice thermodurcissable.

Conformément à l'invention, ce résultat est obtenu au moyen d'un outillage pour le moulage de panneaux auto-raidis en matériau composite à matrice thermodurcissable, formés d'une plaque de base munie de raidisseurs, comprenant un marbre, une vessie d'étanchéité dont un bord périphérique est raccordé de façon étanche sur le marbre, un volume étanche étant délimité entre le marbre et la vessie, et des pièces de calibrage solides aptes à être placées entre les raidisseurs d'un panneau à mouler placé dans ledit volume étanche, caractérisé par le fait que les pièces de calibrage solides sont placées à l'extérieur dudit volume étanche.

Grâce à cet agencement, la pression est appliquée directement par la vessie d'étanchéité aussi bien sur la plaque de base que sur les raidisseurs. La pression est donc répartie de façon parfaitement uniforme et suit les variations d'épaisseur de la pièce résultant de la polymérisation de la résine. L'outillage est en outre parfaitement adapté à la fabrication de panneaux dont la plaque de base présente une épaisseur variable, par exemple en raison de la présence de renforts locaux.

En outre, le positionnement et la rectitude des raidisseurs sont assurés par les pièces de calibrage solides qui sont disposées au-dessus de la vessie.

Enfin, comme les autres outillages connus utilisant une vessie d'étanchéité raccordée de façon étanche sur un marbre, l'outillage n'a pas à reprendre la pression, de sorte qu'il peut être constitué de pièces peu épaisses et que le panneau est facile à chauffer, quelles que soient ses dimensions.

De préférence, les pièces de calibrage solides sont reliées entre elles par une structure de liaison rigide qui a un coefficient de dilatation thermique approximativement égal à celui du panneau à réaliser. Dans ce cas, une potence amovible peut être solidarisée de la structure de liaison afin de positionner cette dernière sur le marbre.

Avantageusement, afin d'assurer un état de surface satisfaisant du panneau après cuisson, des tapis en un matériau élastomère sont interposés entre la vessie d'étanchéité et le panneau à mouler, de façon notamment à protéger ce dernier des plis de la vessie.

Des cales en un matériau élastomère peuvent aussi être placées à l'intérieur du volume étanche, dans le prolongement de chaque raidisseur. Ces cales permettent de protéger les extrémités des raidisseurs et évitent des pincements ou des glissements des fibres du matériau composite à cet endroit.

Afin que les pièces de calibrage puissent être facilement mises en place tout en remplissant leur fonction concernant la position et la planéité des raidisseurs, il existe entre chacune de ces pièces et chacun des raidisseurs un jeu compris entre un jeu minimal et un jeu maximal donnés, à la température de polymérisation du panneau, les pièces de calibrage ayant un coefficient de dilatation tel que, à la température ambiante, ce jeu soit au moins égal à zéro et, de préférence, au plus égal audit jeu maximal. Les jeux minimal et maximal peuvent notamment être d'approximativement 0,1 mm et 0,2 mm, respectivement.

Un mode de réalisation de l'invention va à présent être décrit, à titre d'exemple non limitatif, en se référant aux dessins annexés dans lesquels :

– la figure 1 est une vue en perspective et en coupe partielle représentant de façon schématique un outillage conforme à l'invention, utilisé pour le moulage d'un panneau auto-raidi en matériau composite ; et

– la figure 2 est une vue en coupe représentant à plus grande échelle et plus en détail une partie de l'outillage de la figure 1.

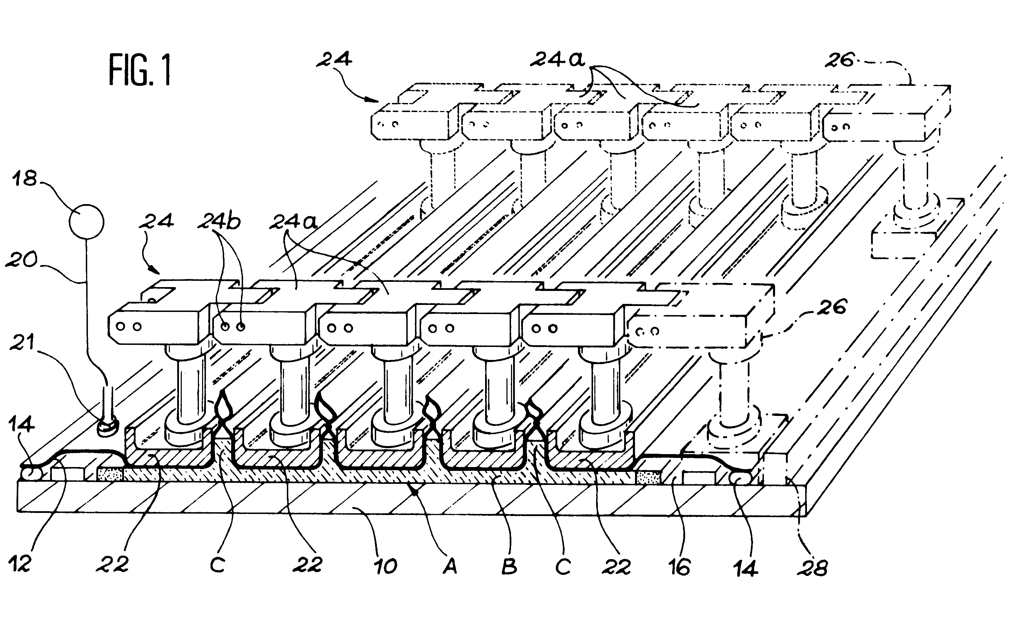

La figure 1 représente l'outillage qui est utilisé conformément à l'invention pour effectuer le moulage sous pression d'un panneau auto-raidi A en matériau composite, dont la matrice est formée d'une résine thermodurcissable. Le panneau A comprend une plaque de base B, qui peut être plane ou légèrement galbée et dont l'épaisseur peut être constante ou variable, ainsi que des raidisseurs C qui font tous saillie sur une même face de la plaque de base B, perpendiculairement à celle-ci, ces raidisseurs étant parallèles entre eux et généralement espacés d'un pas constant.

L'outillage de la figure 1, dans lequel a été préalablement formé le panneau A d'une manière qui sera décrite par la suite, est prévu pour être placé dans une étuve ou dans un autoclave permettant de soumettre ce panneau à un cycle de température préétabli assurant la polymérisation de la résine formant la matrice du panneau.

L'outillage selon l'invention comprend tout d'abord un marbre 10 qui se présente sous la forme d'une plaque de faible épaisseur, par exemple métallique, prévue pour être disposée horizontalement. La face supérieure de cette plaque présente une forme complémentaire de celle de la surface extérieure du panneau A à mouler. Pour simplifier, cette face supérieure a été représentée plane sur la figure 1, mais on comprend aisément qu'elle peut aussi être galbée, selon la forme du panneau à réaliser.

L'outillage de la figure 1 comprend de plus une vessie d'étanchéité 12 qui est disposée selon l'invention immédiatement au-dessus du panneau A à mouler, de façon à suivre les contours de ce panneau. Les dimensions de la vessie sont supérieures à celles de ce panneau, afin que les bords périphériques de cette vessie 12 puissent être raccordés de façon étanche sur le marbre 10 tout autour du panneau, par exemple par un cordon de mastic d'étanchéité 14 ou par tout autre moyen remplissant la même fonction.

L'ensemble formé par le marbre 10 et par la vessie d'étanchéité 12 délimite un volume étanche ou poche 16 dans lequel est placé le panneau A à mouler. Ce volume étanche 16 communique avec une pompe à vide 18, par une canalisation 20 raccordée par exemple sur la vessie d'étanchéité 12 par un embout 21 ménagé sur cette dernière.

Sous l'effet de la différence de pression qui existe entre l'intérieur de l'étuve ou de l'autoclave dans lequel est placé l'outillage et le volume étanche 16 lorsque la pompe à vide 18 est actionnée, une pression indépendante de la température régnant dans l'étuve ou dans l'autoclave est appliquée de façon uniforme par la vessie 12 sur la plaque de base B, sur les flancs des raidisseurs C et même sur les zones de raccordement arrondies formées à la base de ces raidisseurs. La pression ainsi appliquée sur le panneau A est indépendante de la réduction d'épaisseur de ce panneau qui se produit lors de la polymérisation de la résine, aussi bien que des variations d'épaisseurs de la plaque de base B résultant par exemple de la présence de renforts locaux dans cette plaque.

Afin d'assurer en outre le maintien de la géométrie des raidisseurs C lors du moulage, c'est-à-dire le maintien du pas de ces raidisseurs ainsi que le maintien de leur planéité, l'outillage selon l'invention comprend également des pièces de calibrage solides 22 qui sont placées conformément à l'invention au-dessus de la vessie d'étanchéité 12, c'est-à-dire à l'extérieur du volume étanche 16, entre les raidisseurs C du panneau A à mouler. Comme le montre bien la figure 1, ces pièces de calibrage présentent en section approximativement la forme d'un U et s'étendent entre les raidisseurs du panneau A sur toute la longueur de ce dernier.

Il est important de noter que les pièces de calibrage 22 sont réalisées en un matériau solide, c'est-à-dire en un matériau rigide, qui ne flue pas et dont la forme reste constante tout au long du cycle de polymérisation du panneau, aux dilatations thermiques près. Ce matériau peut notamment être un métal ou un alliage métallique.

Comme l'illustre également la figure 1, le positionnement des pièces de calibrage 22 les unes par rapport aux autres et le maintien de leur écartement sont assurés par une structure de liaison formée d'au moins deux ensembles 24 espacés les uns des autres et répartis sur toute la longueur du panneau à mouler.

Chacun des ensembles 24 est constitué de plusieurs éléments indépendants 24a, chacun de ces éléments comportant une colonne dont une extrémité est prévue pour être fixée sur l'une des pièces de calibrage 22. La rigidité de chaque élément 24 est assurée par des groupes de deux broches traversant simultanément chaque paire d'éléments 24a adjacents.

Afin que les pieds des raidisseurs C ne se déplacent pas au cours du cycle de polymérisation, la structure de liaison formée par les ensembles 24 a un coefficient de dilatation thermique approximativement égale à celui du panneau A à réaliser.

Avantageusement et comme l'illustre également la figure 1, l'outillage selon l'invention comprend de plus des potences amovibles 26 permettant d'assurer le positionnement de chaque ensemble 24 de la structure de liaison portant les pièces de calibrage 22, par rapport au marbre 10 avant la polymérisation. Chaque potence 26 est solidarisée de l'un des éléments 24a de la structure de liaison 24 par deux broches 24b et elle repose sur la face supérieure du marbre 10, de façon à pouvoir être amenée par exemple contre une butée amovible 28 faisant saillie sur ce dernier.

Chacune des potences 26 est retirée lorsque l'outillage est placé dans l'étuve ou dans l'autoclave, de façon à laisser l'ensemble flottant, sauf dans le cas particulier où le marbre 10 est fabriqué dans une matière identique à celle de la structure de liaison.

Les dimensions des pièces de calibrage 22 sont choisies de façon à respecter les conditions suivantes :

– à la température de polymérisation, les pièces de calibrage ne doivent pas serrer les raidisseurs, afin que seule la vessie d'étanchéité appuie sur les raidisseurs, ce qui est nécessaire à l'application d'une pression uniforme sur la totalité du panneau ;

– à la température de polymérisation du panneau, il est également souhaitable que les pièces de calibrage soient suffisamment proches des raidisseurs pour éviter une déformation locale de ces derniers.

En pratique, pour que ces deux conditions soient respectées, on dimensionne les pièces de calibrage afin qu'à la température de polymérisation, le jeu entre chacune de ces pièces et chacun des raidisseurs adjacent soit au minimum de 0,1 mm et au maximum de 0,2 mm.

Par ailleurs, les pièces de calibrage 22 ne doivent pas serrer sur les flancs des raidisseurs C à la température ambiante, afin que ces pièces puissent être montées sur les éléments 24a. Cela conduit à choisir le coefficient de dilatation du matériau dans lequel sont réalisées les pièces de calibrage 22 de telle sorte qu'à la température ambiante, le jeu entre chaque pièce de calibrage et chaque raidisseur adjacent soit au moins égal à zéro, et de préférence au plus égal à un jeu maximal de 0,2 mm.

Le matériau constituant les pièces de calibrage 22 est choisi en fonction de ces objectifs, le coefficient de dilatation des pièces étant d'autant plus faible que le pas des raidisseurs est grand et d'autant plus élevé que les raidisseurs sont épais. En effet, plus les raidisseurs sont épais, plus le foisonnement entre le matériau composite frais et le matériau composite cuit est important.

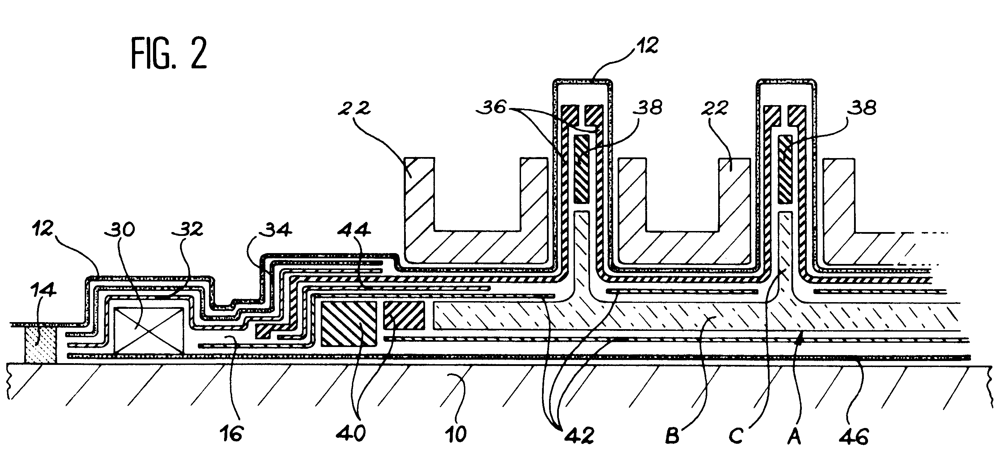

Comme l'illustre plus précisément la figure 2, dans sa partie située immédiatement à l'intérieur du bourrelet 14 de mastic d'étanchéité, la vessie d'étanchéité 12 chevauche un profilé 30 qui repose sur la face supérieure du marbre 10 en entourant le panneau A. Selon des techniques usuelles, un film séparateur 34 et un tissu de drainage 32 sont placés dans cet ordre sur la face intérieure de la vessie d'étanchéité 12, dans la partie de cette dernière qui fait saillie au-delà du bord périphérique du panneau A.

De préférence, des tapis 36 en un matériau élastomère sont placés entre la vessie d'étanchéité 12 et le panneau A, de façon à recouvrir ce dernier en totalité. Ces tapis sont placés bords à bords, afin que leurs bords adjacents se trouvent dans le prolongement des extrémités des raidisseurs C. Les tapis 36 ont notamment pour fonction d'éviter que des plis éventuellement formés dans la vessie n'endommagent l'état de surface du panneau. Le matériau élastomère qui constitue ces tapis est constitué par tout matériau apte à se déformer de façon à transmettre intégralement au panneau la pression appliquée par la vessie.

Des cales 38 également en un matériau élastomère sont placées à l'intérieur du volume étanche 16, dans le prolongement de chacun des raidisseurs C. L'épaisseur de ces cales 38 est approximativement égale à l'épaisseur des raidisseurs, ce qui permet d'éviter les pincements ou les glissements des fibres à l'extrémité de ces derniers.

Un cadre en deux parties 40, également réalisé en matériau élastomère, entoure la plaque de base B du panneau A, l'épaisseur de ce cadre étant approximativement égale à celle de la plaque B.

Comme l'illustre la figure 2, les tapis en élatomère 36 recouvrent à la fois le panneau A, les cales 38 et le cadre 40.

Selon une technique usuelle, les faces inférieure et supérieure de la plaque de base B du panneau sont recouvertes d'un tissu de verre 42, appelé tissu à délaminer, qui a à la fois pour fonction d'assurer le drainage des gaz libérés lors de la polymérisation et de protéger le panneau après le démoulage

Un film séparateur 44 est également placé entre le tapis en élastomère 36 et le tissu à délaminer 42, dans la zone périphérique du panneau et recouvrant le cadre 40.

Enfin, un film démoulant téfloné 46 est placé directement sur le marbre 10 et recouvre toute la surface de ce dernier située à l'intérieur du bourrelet 14 de mastic d'étanchéité.

En plus des avantages précédemment mentionnés concernant l'uniformité de la pression appliquée et le maintien d'une bonne géométrie des raidisseurs, l'outillage selon l'invention permet, lorsqu'il est placé dans une étuve ou dans un autoclave, d'assurer un chauffage rapide de la pièce. En outre, son encombrement et son poids restent réduits étant donné que le dimensionnement de cet outillage n'est pas astreint à la reprise des efforts de pression.

La mise en oeuvre de l'outillage qui vient d'être décrit s'effectue, dans un premier temps, par une opération de drapage. Le moule étant ouvert, cette opération consiste à draper sur le marbre 10 un certain nombre de couches de fibres préimprégnées de résine thermodurcissable, pour réaliser la partie inférieure de la plaque de base B.

On réalise séparément le drapage d'un certain nombre de couches de fibres préimprégnées de résine thermodurcissable sur les pièces de calibrage 22. La vessie d'étanchéité 12 ainsi que les tapis en élastomère 36 sont placés sur les pièces de calibrage avant le début du drapage. Les profilés en forme de U ainsi formés sur chacune des pièces de calibrage sont ensuite accolés les uns aux autres et reliés par la structure de liaison rigide 24, de façon à former les raidisseurs C et la partie supérieure de la plaque de base B.

Après que les pièces annexes de l'outillage telles que le cadre en élastomère 40 et le profilé 30 aient été placé sur le marbre 10, l'ensemble formé par les structures de liaison rigides 24, les pièces de calibrage 22 et la partie du panneau à réaliser préalablement drapée sur ces pièces, est retourné et placé au-dessus du marbre dans la position illustrée sur la figure 1. Le positionnement correct de la partie ainsi retournée du panneau par rapport à la partie préalablement drapée sur le marbre est réalisé à l'aide des potences amovibles 26. Les cales en élastomère 36 sont placées dans le prolongement des extrémités des raidisseurs. Les broches 24b sont retirées, et les pièces de calibrage 22 sont retirées puis repositionnées une à une pour permettre le placement de la vessie 12. La structure 24 étant reformée par la mise en place des broches 24b, la potence est retirée et le bourrelet 14 de mastic d'étanchéité est mis en place.

L'ensemble de l'outillage peut alors être placé dans une étuve ou dans un autoclave, dans lequel il subit le cycle de température nécessaire à la polymérisation de la résine constituant la matrice du panneau, après que le volume étanche 16 ait été mis en dépression sous l'action de la pompe à vide 18.

Lorsque la polymérisation est terminée, l'outillage est sorti du four et le panneau est démoulé.

Bien entendu, l'invention n'est pas limitée au mode de réalisation qui vient d'être décrit à titre d'exemple, mais en couvre toutes les variantes. Ainsi, la structure de liaison des pièces de calibrage peut être réalisée de façon à permettre un réglage de l'écartement entre ces pièces, ce qui permet d'utiliser une structure unique pour mouler des panneaux dont l'écartement entre les raidisseurs varie.

## Revendications

1. Outillage pour le moulage de panneaux auto-raidis en matériau composite à matrice thermodurcissable, formés d'une plaque de base munie de raidisseurs, comprenant un marbre (10), une vessie d'étanchéité (12) dont un bord périphérique est raccordé de façon étanche sur le marbre, un volume étanche (16) étant délimité entre le marbre et la vessie, et des pièces de calibrage solides (22) aptes à être placées entre les raidisseurs d'un panneau à mouler placé dans ledit volume étanche, caractérisé par le fait que les pièces de calibrage solides (22) sont placées à l'extérieur dudit volume étanche (16).

2. Outillage selon la revendication 1, caractérisé par le fait que les pièces de calibrage solides (22) sont reliées par une structure de liaison rigide (24).

3. Outillage selon la revendication 2, caractérisé par le fait que la structure de liaison (24) a un coefficient de dilatation thermique approximativement égal à celui du panneau à réaliser.

4. Outillage selon l'une quelconque des revendications 2 et 3, caractérisé par le fait qu'il comprend de plus une potence amovible (26) apte à être solidarisée de la structure de liaison (24) afin de positionner cette dernière sur le marbre (10).

5. Outillage selon l'une quelconque des revendications 1 à 4, caractérisé par le fait qu'il comprend de plus des tapis (36) en un matériau élastomère aptes à être interposés entre la vessie d'étanchéité (12) et le panneau à mouler.

6. Outillage selon l'une quelconque des revendications 1 à 5, caractérisé par le fait qu'il comprend de plus des cales (38) en un matériau élastomère, aptes à être placées à l'intérieur dudit volume étanche (16), dans le prolongement de chacun des raidisseurs.

7.Outillage selon l'une quelconque des revendications 1 à 6, caractérisé par le fait qu'il existe entre chacune des pièces de calibrage (22) et chacun des raidisseurs un jeu compris en un jeu minimal et un jeu maximal donnés à la température de polymérisation du panneau, les pièces de calibrage ayant un coefficient de dilatation tel que, à la température ambiante, ce jeu soit au moins égal à zéro.

8. Outillage selon la revendication 7, caractérisé par le fait que le coefficient de dilatation des pièces de calibrage (22) est tel que, à la température ambiante, ledit jeu soit au plus égal audit jeu maximal.

9. Outillage selon l'une quelconque des revendications 7 et 8, caractérisé par le fait que les jeux minimal et maximal sont approximativement de 0,1 mm et 0,2 mm, respectivement.

## Patentansprüche

1. Formvorrichtung für selbstverstärkte Verbundplatten mit einer wärmeaushärtenden Matrix, die aus einer mit Verstärkungen versehenen Basisplatte hergestellt werden, mit einem Marmorplatte (10), einer Abdichtungsblase (12), von der ein Umfangsrand dicht auf der Marmorplatte befestigt ist, wobei ein dichtes Volumen (16) zwischen der Marmorplatte und der Blase abgegrenzt wird, und festen Kalibrierelementen (22), die geeignet sind, zwischen den Verstärkungen einer zu formenden platte, die in das dichte Volumen eingesetzt ist, angeordnet zu werden, gekennzeichnet durch die Tatsache, daß die festen Kalibrierelemente (22) außerhalb des dichten Volumens (16) angeordnet sind.

2. Vorrichtung nach Anspruch 1, gekennzeichnet durch die Tatsache, daß die festen Kalibrierelemente (22) mit einer steifen Verbindungsstruktur (24) verbunden sind.

3. Vorrichtung nach Anspruch 2, gekennzeichnet durch die Tatsache, daß die Verbindungsstruktur (24) einen thermischen Ausdehnungskoeffizienten ungefähr gleich dem der herzustellenden Platte besitzt.

4. Vorrichtung nach einem der Ansprüche 2 und 3, gekennzeichnet durch die Tatsache, daß sie außerdem einen abnehmbaren Arm (26) umfaßt, der geeignet ist, an der Verbindungsstruktur (24) befestigt zu werden, um letztere auf der Marmorplatte (10) zu positionieren.

5. Vorrichtung nach einem der Ansprüche 1 bis 4, gekennzeichnet durch die Tatsache, daß sie außerdem Teppiche (36) aus einem elastomeren Material umfaßt, die geeignet sind, zwischen der Dichtungsblase (12) und der zu formenden Platte angeordnet zu werden.

6. Vorrichtung nach einem der Ansprüche 1 bis 5, gekennzeichnet durch die Tatsache, daß sie außerdem Keile (38) aus einem elastomeren Material umfaßt, die geeignet sind, im Innern des dichten Volumens in der Verlängerung jeder der Verstärkungen angeordnet zu werden.

7. Vorrichtung nach einem der Ansprüche 1 bis 6, gekennzeichnet durch die Tatsache, daß zwischen jedem der Kalibrierelemente (22) und jedem der Verstärkungen ein Spiel zwischen einem gegebenen minimalen Spiel und einem maximalen Spiel bei der Polymerisationstemperatur der Platte existiert, wobei die Kalibrierelemente einen solchen Ausdehnungskoeffizienten besitzen, daß dieses Spiel bei Raumtemperatur wenigstens gleich Null ist.

8. Vorrichtung nach Anspruch 7, gekennzeichnet durch die Tatsache, daß der Ausdehnungskoeffizient der Kalibrierelemente (22) derart ist, daß das Spiel bei Raumtemperatur höchstens gleich dem maximalen Spiel ist.

9. Vorrichtung nach einem der Ansprüche 7 und 8, gekennzeichnet durch die Tatsache, daß das minimale Spiel und das maximale Spiel jeweils etwa 0,1 mm und 0,2 mm beträgt.

## Claims

1. Tool for moulding self-stiffened panels of composite material with a thermosetting matrix, formed from a base plate provided with stiffeners, comprising a block (10), a sealing bag (12), whereof one peripheral edge is tightly connected to the block, a tight volume (16) being defined between the block and the bag, and solid calibration parts (22) which can be placed between the stiffeners of a panel to be moulded placed in said tight volume, characterized in that the solid calibration parts (22) are placed outside said tight volume (16).

2. Tool according to claim 1, characterized in that the solid calibration parts (22) are connected by a rigid connecting structure (24).

3. Tool according to claim 2, characterized in that the connecting structure (24) has a thermal expansion coefficient approximately equal to that of the panel to be produced.

4. Tool according to either of the claims 2 and 3, characterized in that a detachable bracket (26) can be joined to the connecting structure (24) so as to position the latter on the block (10).

5. Tool according to any one of the claims 1 to 4, characterized in that elastomeric material covers (36) can be interposed between the sealing bag (12) and the panel to be moulded.

6. Tool according to any one of the claims 1 to 5, characterized in that elastomeric material shims (38) can be placed within the tight volume (16), in the extension of each of the stiffeners.

7. Tool according to any one of the claims 1 to 6, characterized in that between each of the calibration parts (22) and each of the stiffeners there is a clearance between a minimum and a maximum predetermined clearances at the panel polymerization temperature, the calibration parts having an expansion coefficient such, that at ambient temperature, said clearance is at least equal to zero.

8. Tool according to claim 7, characterized in that the expansion coefficient of the calibration parts (22) is such that, at ambient temperature, said clearance is at the most equal to the maximum clearance.

9. Tool according to either of the claims 7 and 8, characterized in that the minimum and maximum clearances are approximately 0.1 and 0.2 mm respectively.

FIG.1

# FIG. 2